(19) Europäisches Patentamt
European Patent Office
Office européen des brevets

(11) EP 3 652 242 B1

(12) # EUROPÄISCHE PATENTSCHRIFT

(45) Veröffentlichungstag und Bekanntmachung des Hinweises auf die Patenterteilung:
**08.09.2021 Patentblatt 2021/36**

(21) Anmeldenummer: **18740538.6**

(22) Anmeldetag: **06.07.2018**

(51) Int Cl.:
***C08K 5/00*** $^{(2006.01)}$ ***C08K 5/49*** $^{(2006.01)}$
***C08K 5/5313*** $^{(2006.01)}$ ***C08K 7/14*** $^{(2006.01)}$
***C08L 77/00*** $^{(2006.01)}$

(86) Internationale Anmeldenummer:
**PCT/EP2018/068321**

(87) Internationale Veröffentlichungsnummer:
**WO 2019/011790 (17.01.2019 Gazette 2019/03)**

(54) **FLAMMHEMMENDE POLYAMIDZUSAMMENSETZUNGEN MIT HOHER WÄRMEFORMBESTÄNDIGKEIT UND DEREN VERWENDUNG**

FLAME-RETARDANT POLYAMIDE COMPOSITIONS WITH A HIGH HEAT DEFLECTION TEMPERATURE, AND USE THEREOF

COMPOSITIONS DE POLYAMIDE IGNIFUGES AYANT UNE RÉSISTANCE À LA DÉFORMATION À CHAUD ÉLEVÉE ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2017 DE 102017212098**

(43) Veröffentlichungstag der Anmeldung:
**20.05.2020 Patentblatt 2020/21**

(73) Patentinhaber: **Clariant International Ltd**
**4132 Muttenz (CH)**

(72) Erfinder:
- **BAUER, Harald**
**50170 Kerpen (DE)**
- **HÖROLD, Sebastian**
**86420 Diedorf (DE)**
- **SICKEN, Martin**
**51149 Köln (DE)**

(74) Vertreter: **Jacobi, Carola**
**Clariant Produkte (Deutschland) GmbH**
**Patent Management**
**Industriepark Höchst, G 860**
**65926 Frankfurt am Main (DE)**

(56) Entgegenhaltungen:
**EP-A1- 2 025 710 WO-A1-2009/109318**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 652 242 B1

**Beschreibung**

Die vorliegende Erfindung betrifft flammhemmende Polyamidzusammensetzungen sowie daraus hergestellte Formteile, die sich durch eine sehr gute Flammfestigkeit und durch eine hohe Wärmeformbeständigkeitstemperatur (HDT) auszeichnen.

Brennbare Kunststoffe müssen in der Regel mit Flammschutzmitteln ausgerüstet werden, um die von den Kunststoffverarbeitern und teilweise vom Gesetzgeber geforderten hohen Flammschutzanforderungen erreichen zu können. Bevorzugt - auch aus ökologischen Gründen - werden nicht-halogenierte Flammschutzmittelsysteme eingesetzt, die nur geringe oder keine Rauchgase bilden.

Unter diesen Flammschutzmitteln haben sich die Salze von Phosphinsäuren (Phosphinate) als besonders für thermoplastische Polymere wirksam erwiesen (DE 2 252 258 A und DE 2 447 727 A).

Darüber hinaus sind synergistische Kombinationen von Phosphinaten mit bestimmten stickstoffhaltigen Verbindungen bekannt, die in einer ganzen Reihe von Polymeren als Flammschutzmittel effektiver wirken, als die Phosphinate allein (WO-2002/28953 A1 sowie DE 197 34 437 A1 und DE 197 37 727 A1).

Aus der US 7,420,007 B2 ist bekannt, dass Dialkylphosphinate enthaltend eine geringe Menge an ausgewählten Telomeren als Flammschutzmittel für Polymere geeignet sind, wobei das Polymere bei der Einarbeitung des Flammschutzmittels in die Polymermatrix nur einem recht geringen Abbau unterliegt.

Flammschutzmittel müssen häufig in hohen Dosierungen zugesetzt werden, um eine ausreichende Flammwidrigkeit des Kunststoffs nach internationalen Normen sicherzustellen. Aufgrund ihrer chemischen Reaktivität, die für die Flammschutzwirkung bei hohen Temperaturen erforderlich ist, können Flammschutzmittel, vor allem bei höheren Dosierungen, die Verarbeitungsstabilität von Kunststoffen beeinträchtigen. Es kann zu verstärktem Polymerabbau, zu Vernetzungsreaktionen, zu Ausgasungen oder Verfärbungen kommen.

Aus der WO 2014/135256 A1 sind Polyamid-Formmassen bekannt, die eine deutlich verbesserte die thermische Stabilität, eine verringerte Migrationsneigung sowie gute elektrische und mechanische Eigenschaften aufweisen.

Bislang fehlt es jedoch an flammgeschützten phosphinathaltigen Polyamidzusammensetzungen die alle geforderten Eigenschaften gleichzeitig erreichen, wie gute elektrische Werte (GWFI, CTI), ausgezeichnete Wärmeformbeständigkeit (HDT-A) sowie einen effektiven Flammschutz, gekennzeichnet durch möglichst kurze Nachbrennzeiten (UL-94).

Es war daher Aufgabe der vorliegenden Erfindung, flammgeschützte Polyamidzusammensetzungen auf Basis phosphinathaltiger Flammschutzsysteme zur Verfügung zu stellen, die alle vorgenannten Eigenschaften gleichzeitig aufweisen und die insbesondere gute elektrische Werte und eine hohe Wärmeformbeständigkeit sowie einen hohen Flammschutz, gekennzeichnet durch möglichst kurze Nachbrennzeiten, besitzen.

Gegenstand der Erfindung sind flammhemmende Polyamidzusammensetzungen mit einer Wärmeformbeständigkeitstemperatur HDT-A von mindestens 280 °C enthaltend

- Polyamid mit einem Schmelzpunkt von größer gleich 290 °C, vorzugsweise von größer gleich 300 °C, als Komponente A,

- Füllstoffe und/oder Verstärkungsstoffe, vorzugsweise Glasfasern, als Komponente B,

- Diethylphosphinsäuresalz der Formel (I) als Komponente C

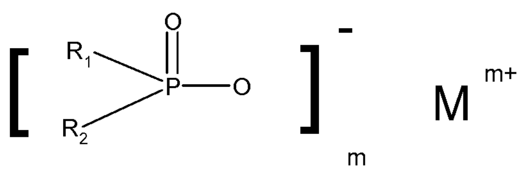

(I),

worin $R_1$ und $R_2$ Ethyl bedeuten,
M Al, Fe, $TiO_p$ oder Zn ist,
m 2 bis 3, vorzugsweise 2 oder 3, bedeutet, und

$$p = (4 - m) / 2$$

ist

- Verbindung ausgewählt aus der Gruppe der Al-, Fe-, $TiO_p$- oder Zn-Salze der Ethylbutylphosphinsäure, der Dibutylphosphinsäure, der Ethylhexylphosphinsäure, der Butylhexylphosphinsäure und/oder der Dihexylphosphinsäure als Komponente D, und

- Monoethylphosphinsäuresalz der Formel II als Komponente E

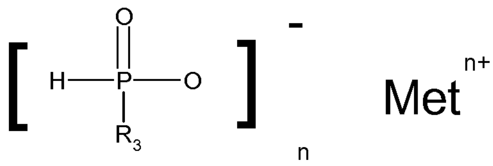

(II),

worin $R_3$ Ethyl bedeutet,
Met Al, Fe, $TiO_q$ oder Zn ist,
n 2 bis 3, vorzugsweise 2 oder 3, bedeutet, und

$$q = (4 - n) / 2$$

ist.

In der erfindungsgemäßen Polyamidzusammensetzung beträgt der Anteil an Komponente A üblicherweise 25 bis 95 Gew.-%, vorzugsweise 25 bis 75 Gew.-%.
In der erfindungsgemäßen Polyamidzusammensetzung beträgt der Anteil an Komponente B üblicherweise 1 bis 45 Gew.-%, vorzugsweise 20 bis 40 Gew.-%.
In der erfindungsgemäßen Polyamidzusammensetzung beträgt der Anteil an Komponente C üblicherweise 0,75 bis 30 Gew.-%, vorzugsweise 5 bis 20 Gew.-%.
In der erfindungsgemäßen Polyamidzusammensetzung beträgt der Anteil an Komponente D üblicherweise 0,01 bis 3 Gew.-%, vorzugsweise 0,05 bis 1,5 Gew.-%.
In der erfindungsgemäßen Polyamidzusammensetzung beträgt der Anteil an Komponente E üblicherweise 0,01 bis 2 Gew.-%, vorzugsweise 0,01 bis 0,5 Gew.-%.
Dabei beziehen sich die Prozentangaben für die Anteile der Komponenten A bis E auf die Gesamtmenge der Polyamidzusammensetzung.
Bevorzugt werden flammhemmende Polyamidzusammensetzungen, bei denen

- der Anteil von Komponente A 25 bis 95 Gew.-%,
- der Anteil von Komponente B 1 bis 45 Gew.-%,
- der Anteil von Komponente C 0,75 bis 30 Gew.-%,
- der Anteil von Komponente D 0,01 bis 3 Gew.-%, und
- der Anteil von Komponente E 0,01 bis 2 Gew.-% beträgt,

wobei die Prozentangaben sich auf die Gesamtmenge der Polyamidzusammensetzung beziehen.
Besonders bevorzugt werden flammhemmende Polyamidzusammensetzungen bei denen

- der Anteil von Komponente A 25 bis 75 Gew.-%,
- der Anteil von Komponente B 20 bis 40 Gew.-%,
- der Anteil von Komponente C 5 bis 20 Gew.-%,
- der Anteil von Komponente D 0,05 bis 1,5 Gew.-%, und
- der Anteil von Komponente E 0,01 bis 0,5 Gew.-% beträgt,

wobei die Prozentangaben sich auf die Gesamtmenge der Polyamidzusammensetzung beziehen.
Bevorzugt eingesetzte Salze der Komponente C sind solche, worin $M^{m+}$ $Zn^{2+}$, $Fe^{3+}$ oder insbesondere $Al^{3+}$ bedeuten.
Bevorzugt eingesetzte Salze der Komponente D sind Zink-, Eisen- oder insbesondere Aluminiumsalze.
Bevorzugt eingesetzte Salze der Komponente E sind solche, worin $Met^{n+}$ $Zn^{2+}$, $Fe^{3+}$ oder insbesondere $Al^{3+}$ bedeuten.
Bevorzugt werden flammhemmende Polyamidzusammensetzungen, in denen M und Met Al bedeuten, m und

n 3 sind und in denen die Verbindungen der Komponente D als Aluminiumsalze vorliegen.

In einer bevorzugten Ausführungsform enthalten die oben beschriebenen flammhemmenden Polyamidzusammensetzungen Phosphonsäuresalze der Formel (IX) als Komponente F

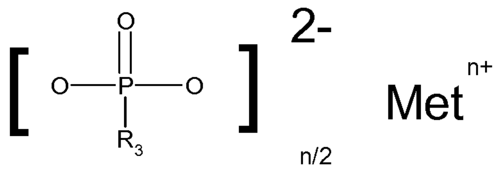 (IX),

worin $R_3$ Ethyl bedeutet,
Met Al, Fe, $TiO_q$ oder Zn ist,
n 2 bis 3, vorzugsweise 2 oder 3, bedeutet, und

$$q = (4 - n) / 2$$

ist.

Komponente F liegt vorzugsweise in einer Menge von 0,005 bis 1 Gew.-%, insbesondere in einer Menge von 0,01 bis 0,6 Gew.-%, bezogen auf die Gesamtmenge der Polyamidzusammensetzung, vor.

In einer weiteren bevorzugten Ausführungsform enthalten die oben beschriebenen flammhemmenden Polyamidzusammensetzungen anorganische Phosphonate als weitere Komponente G.

Die Verwendung der erfindungsgemäß als Komponente G eingesetzten anorganischen Phosphonate oder auch Salze der phosphorigen Säure (Phosphite) sind als Flammschutzmittel ist bekannt. So offenbart WO 2012/045414 A1 Flammschutzmittelkombinationen, die neben Phosphinsäuresalzen auch Salze der phosphorigen Säure (= Phosphite) enthalten.

Bevorzugt entspricht das anorganische Phosphonat (Komponente G) den allgemeinen Formeln (IV) oder (V)

$$[(HO)PO_2]^{2-}_{p/2}\ Kat^{p+} \qquad (IV)$$

$$[(HO)_2PO]^{-}_{p}\ Kat^{p+} \qquad (V)$$

worin Kat ein p-wertiges Kation, insbesondere ein Kation eines Alkalimetalls, Erdalkalimetalls, ein Ammoniumkation und/oder ein Kation von Fe, Zn oder insbesondere von Al einschließlich der Kationen Al(OH) oder $Al(OH)_2$ ist, und p 1, 2, 3 oder 4 bedeutet.

Bevorzugt handelt es sich bei dem anorganischen Phosphonat (Komponente G) um Aluminiumphosphit $[Al(H_2PO_3)_3]$, sekundäres Aluminiumphosphit $[Al_2(HPO_3)_3]$, basisches Aluminiumphosphit $[Al(OH)(H_2PO_3)_2{*}2aq]$, Aluminiumphosphittetrahydrat $[Al_2(HPO_3)_3{*}4aq]$, Aluminiumphosphonat, $Al_7(HPO_3)_9(OH)_6$(1,6-Hexandiamin)$_{1,5}{*}12H_2O$, $Al_2(HPO_3)^3{*}xAl_2O_3{*}nH_2O$ mit x = 2,27 - 1 und/oder $Al_4H_6P_{16}O_{18}$.

Bei dem anorganischen Phosphonat (Komponente G) handelt es sich bevorzugt auch um Aluminiumphosphite der Formeln (VI), (VII) und/oder (VIII)

$$AL_2(HPO_3)_3 \times (H_2O)_q \qquad (VI),$$

wobei q 0 bis 4 bedeutet,

$$Al_{2,00}M_z(HPO_3)_y(OH)_v \times (H_2O)_w \qquad (VII),$$

wobei M Alkalimetallkationen, z 0,01 bis 1,5 und y 2,63 bis 3,5 und v 0 bis 2 und w 0 bis 4 bedeutet;

$$Al_{2,00}(HPO_3)_u(H_2PO_3)_t \times (H_2O)_s \qquad (VIII),$$

wobei u 2 bis 2,99 und t 2 bis 0,01 und s 0 bis 4 bedeutet, und/oder um Aluminiumphosphit $[Al(H2PO_3)_3]$, um sekundäres Aluminiumphosphit $[Al_2(HPO_3)_3]$, um basisches Aluminiumphosphit $[Al(OH)(H_2PO_3)_2{*}2aq]$, um Aluminiumphosphittetrahydrat $[Al_2(HPO_3)_3{*}4aq]$, um Aluminiumphosphonat, um $Al_7(HPO_3)_9(OH)_6$(1,6-Hexandiamin)$_{1,5}{*}12H_2O$, um $Al_2(HPO_3)^3{*}xAl_2O_3{*}nH_2O$ mit x = 2,27 - 1 und/oder $Al_4H_6P_{16}O_{18}$.

Bevorzugte anorganische Phosphonate (Komponente G) sind in Wasser unlösliche bzw. schwerlösliche Salze.

Besonders bevorzugte anorganische Phosphonate sind Aluminium-, Calcium- und Zinksalze.

Besonders bevorzugt handelt es sich bei Komponente G um ein Umsetzungsprodukt aus phosphoriger Säure und einer Aluminiumverbindung.

Besonders bevorzugte Komponenten G sind Aluminiumphosphite mit den CAS-Nummern 15099-32-8, 119103-85-4, 220689-59-8, 56287-23-1, 156024-71-4, 71449-76-8 und 15099-32-8.

Die Herstellung der bevorzugt eingesetzten Aluminiumphosphite erfolgt durch Umsetzung einer Aluminiumquelle mit einer Phosphorquelle und wahlweise einem Templat in einem Lösungsmittel bei 20 - 200 °C während einer Zeitspanne bis zu 4 Tagen. Aluminiumquelle und Phosphorquelle werden dazu 1 - 4 h vermischt, unter hydrothermalen Bedingungen oder am Rückfluss erhitzt, abfiltriert, gewaschen und z. B. bei 110 °C getrocknet.

Bevorzugte Aluminiumquellen sind Aluminiumisopropoxid, Aluminiumnitrat, Aluminiumchlorid, Aluminiumhydroxid (z. B. Pseudoböhmit).

Bevorzugte Phosphorquellen sind Phosphorige Säure, (saures) Ammoniumphosphit, Alkaliphosphite oder Erdalkaliphosphite.

Bevorzugte Alkaliphosphite sind Dinatriumphosphit, Dinatriumphosphithydrat, Trinatriumphosphit, Kaliumhydrogenphosphit

Bevorzugtes Dinatriumphosphithydrat ist Brüggolen® H10 der Fa. Brüggemann. Bevorzugte Template sind 1,6-Hexandiamin, Guanidincarbonat oder Ammoniak.

Bevorzugtes Erdalkaliphosphit ist Calciumphosphit.

Das bevorzugte Verhältnis von Aluminium zu Phosphor zu Lösungsmittel ist dabei 1 : 1 : 3,7 bis 1 : 2,2 : 100 mol. Das Verhältnis von Aluminium zu Templat ist 1 : 0 bis 1 : 17 mol. Der bevorzugte pH-Wert der Reaktionslösung ist 3 bis 9. Bevorzugtes Lösungsmittel ist Wasser.

Besonders bevorzugt wird in der Anwendung das gleiche Salz der Phosphinsäure wie der phosphorigen Säure verwendet, also z. B. Aluminiumdiethylphosphinat zusammen mit Aluminiumphosphit oder Zinkdiethylphosphinat zusammen mit Zinkphosphit.

In einer bevorzugten Ausführungsform enthalten die oben beschriebenen flammhemmenden Polyesterzusammensetzungen als Komponente G eine Verbindung der Formel (III)

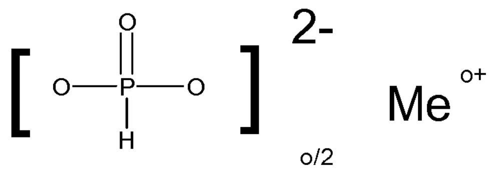

(III),

worin Me Fe, $TiO_r$, Zn oder insbesondere Al ist,
o 2 bis 3, vorzugsweise 2 oder 3, bedeutet, und

$$r = (4 - o) / 2$$

ist.

Bevorzugt eingesetzte Verbindungen der Formel III sind solche, worin $Me^{o+}$ $Zn^{2+}$, $Fe^{3+}$ oder insbesondere $Al^{3+}$ bedeuten.

Komponente G liegt vorzugsweise in einer Menge von 0,005 bis 10 Gew.-%, insbesondere in einer Menge von 0,02 bis 5 Gew.-%, bezogen auf die Gesamtmenge der Polyamidzusammensetzung, vor.

Die erfindungsgemäßen flammhemmenden Polyamidzusammensetzungen weisen eine hohe Wärmeformbeständigkeitstemperatur (HDT-A) nach DIN EN ISO 75-3 von mindestens 280 °C, vorzugsweise von mindestens 290 °C und besonders bevorzugt von mindestens 300 °C auf.

Bevorzugt sind erfindungsgemäße flammhemmende Polyamidzusammensetzungen, die einen Comparative Tracking Index, gemessen nach dem International Electrotechnical Commission Standard IEC-60112/3, von größer gleich 500 Volt aufweisen.

Ebenfalls bevorzugte erfindungsgemäße flammhemmende Polyamidzusammensetzungen erreichen eine Bewertung von V0 nach UL-94, insbesondere gemessen an Formteilen von 3,2 mm bis 0,4 mm Dicke.

Die erfindungsgemäßen Polyamidzusammensetzungen enthalten als Komponente A ein oder mehrere thermoplastische Polyamide mit einem Schmelzpunkt von größer gleich 290 °C. Der Schmelzpunkt wird dabei mittels Differential-Scanning-Kalorimetrie (DSC) bei einer Aufheizrate von 10 K/Sekunde bestimmt.

Unter thermoplastischen Polyamiden werden in Anlehnung an Hans Domininghaus in "Die Kunststoffe und ihre Eigenschaften", 5. Auflage (1998), Seite 14, Polyamide verstanden, deren Molekülketten keine oder auch mehr oder weniger lange und in der Anzahl unterschiedliche Seitenverzweigungen aufweisen, die in der Wärme erweichen und nahezu beliebig formbar sind.

Die erfindungsgemäß bevorzugten Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren oder auch polymeren Legierungspartnern, bevorzugt Elastomeren, zu Werkstoffen mit speziell eingestellten Eigenschaftskombinationen ausgerüstet werden. Geeignet sind auch Blends mit Anteilen von anderen Polymeren, bevorzugt von Polyethylen, Polypropylen, ABS, wobei ggf. ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit, insbesondere wenn es verstärkte Polyamide sind. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Bevorzugt als Komponente A einzusetzende Polyamide sind teilkristalline und aromatische oder teilaromatische Polyamide, die ausgehend von Diaminen und Dicarbonsäuren und/oder Lactamen mit wenigstens 5 Ringgliedern oder entsprechenden Aminosäuren hergestellt werden können.

Als Edukte kommen hauptsächlich aromatische Dicarbonsäuren, bevorzugt Isophthalsäure und/oder Terephthalsäure oder deren polyamidbildende Derivate, wie Salze, in Betracht, die allein oder in Kombination mit aliphatischen Dicarbonsäuren oder deren polyamidbildenden Derivaten, bevorzugt Adipinsäure, 2,2,4- und 2,4,4-Trimethyladipinsäure, Azelainsäure und/oder Sebazinsäure, zusammen mit aliphatischen und/oder aromatischen Diaminen, bevorzugt Tetramethylendiamin, Hexamethylendiamin, 1,9-Nonandiamin, 2,2,4- und 2,4,4-Trimethylhexamethylendiamin, den isomeren Diaminodicyclohexylmethanen, Diaminodicyclohexylpropanen, Bis-(aminomethyl)cyclohexanen, Phenylendiaminen und/oder Xylylendiaminen, und/oder mit Aminocarbonsäuren, bevorzugt Aminocapronsäure oder den entsprechenden Lactamen eingesetzt werden. Copolyamide aus mehreren der genannten Monomeren sind eingeschlossen.

Besonders geeignet sind weiterhin aromatische und teilaromatische Polyamide also Verbindungen, bei denen wenigstens ein Teil der Wiederholeinheiten aus aromatischen Struktureinheiten aufgebaut ist. Diese Polymere können gegebenenfalls in Kombination mit kleineren Mengen wie bis zu 20 Gew.-%, bezogen auf die Menge an Polyamid, an aliphatischen Polyamiden, insbesondere PA6 und/oder PA6.6, eingesetzt werden, wenn damit eine Wärmeformbeständigkeitstemperatur der Formmasse oder des daraus hergestellten Formkörpers mindestens 290 °C erreicht.

Bevorzugt geeignet sind aromatische Polyamide ausgehend von Xylylendiamin und Adipinsäure; oder Polyamide, hergestellt aus Hexamethylendiamin und Iso- und/oder Terephthalsäure und gegebenenfalls einem Elastomer als Modifikator, z. B. Poly-2,4,4-trimethylhexamethylen-terephthalamid oder Poly-m-phenylenisophthalamid, Blockcopolymere der vorstehend genannten Polyamide mit Polyolefinen, Olefin-Copolymeren, Ionomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

In einer bevorzugten Ausführungsform ist Komponente A ein aromatisches oder teilaromatisches Polyamid oder ein Gemisch aus mehreren aromatischen oder teilaromatischen Polyamiden oder ein Gemisch aus Polyamid 6.6 und einem oder mehreren aromatischen oder teilaromatischen Polyamiden.

Den neben dem thermoplastischen Polyamid in einer bevorzugten Ausführungsform zusätzlich einzusetzenden Polymeren können übliche Additive, insbesondere Entformungsmittel, Stabilisatoren und/oder Fließhilfsmittel in der Schmelze zugemischt oder auf der Oberfläche aufgebracht werden. Ausgangsstoffe für die thermoplastischen Polyamide der Komponente A können synthetisch z. B. aus petrochemischen Rohstoffen und/oder über chemische oder biochemische Prozesse aus nachwachsenden Rohstoffen hervorgegangen sein.

Als Komponente B werden Füllstoffe und/oder vorzugsweise Verstärkungsstoffe eingesetzt, bevorzugt Glasfasern. Es können auch Mischungen aus zwei oder mehreren unterschiedlichen Füllstoffen und/oder Verstärkungsstoffen, eingesetzt werden.

Bevorzugte Füllstoffe sind mineralische teilchenförmige Füllstoffe auf der Basis von Talk, Glimmer, Silikat, Quarz, Titandioxid, Wollastonit, Kaolin, amorphe Kieselsäuren, nanoskaligen Mineralien, besonders bevorzugt Montmorilloniten oder Nano-Böhmiten, Magnesiumcarbonat, Kreide, Feldspat,Glaskugeln und/oder Bariumsulfat. Besonders bevorzugt werden mineralische teilchenförmige Füllstoffe auf der Basis von Talk, Wollastonit und/oder Kaolin.

Besonders bevorzugt werden ferner auch nadelförmige mineralische Füllstoffe eingesetzt. Unter nadelförmigen

mineralischen Füllstoffen wird erfindungsgemäß ein mineralischer Füllstoff mit stark ausgeprägtem nadelförmigen Charakter verstanden. Bevorzugt sind nadelförmige Wollastonite. Bevorzugt weist das Mineral ein Länge zu Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäß als Komponente B eingesetzten nadelförmigen mineralischen Füllstoffe liegt bevorzugt bei kleiner 20 $\mu$m, besonders bevorzugt bei kleiner 15 $\mu$m, insbesondere bevorzugt bei kleiner 10 $\mu$m, bestimmt mit einem CILAS Granulometer.

Bei den erfindungsgemäß vorzugsweise eingesetzten Komponenten B handelt es sich um Verstärkungsstoffe. Dabei kann es sich beispielsweise um Verstärkungsstoffe auf der Basis von Kohlenstofffasern und/oder von Glasfasern handeln.

Der Füllstoff und/oder Verstärkungsstoff kann in einer bevorzugten Ausführungsform oberflächenmodifiziert sein, vorzugsweise mit einem Haftvermittler bzw. einem Haftvermittlersystem, besonders bevorzugt auf Silanbasis. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Bei den erfindungsgemäß als Komponente B bevorzugt eingesetzten Glasfasern kann es sich um Kurzglasfasern und/oder um Langglasfasern handeln. Als Kurz- oder Langglasfasern können Schnittfasern eingesetzt werden. Kurzglasfasern können auch in Form von gemahlenen Glasfasern zum Einsatz kommen. Daneben können Glasfasern außerdem in der Form von Endlosfasern eingesetzt werden, beispielsweise in der Form von Rovings, Monofilamenten, Filamentgarnen oder Zwirnen, oder Glasfasern können in der Form von textilen Flächengebilden eingesetzt werden, beispielsweise als Glasgewebe, als Glasgeflecht oder als Glasmatte.

Typische Faserlängen für Kurzglasfasern vor dem Einarbeiten in die Polyamidmatrix bewegen sich im Bereich von 0,05 bis 10 mm, vorzugsweise von 0,1 bis 5 mm. Nach dem Einarbeiten in die Polyamidmatrix hat sich die Länge der Glasfasern verringert. Typische Faserlängen für Kurzglasfasern nach dem Einarbeiten in die Polyamidmatrix bewegen sich im Bereich von 0,01 bis 2 mm, vorzugsweise von 0,02 bis 1 mm.

Die Durchmesser der einzelnen Fasern kann in weiten Bereichen schwanken. Typische Durchmesser der einzelnen Fasern bewegen sich im Bereich von 5 bis 20 $\mu$m.

Die Glasfasern können beliebige Querschnittsformen aufweisen, beispielsweise runde, elliptische, n-eckige oder irreguläre Querschnitte. Es können Glasfasern mit mono- oder multilobalen Querschnitten verwendet werden.

Glasfasern können als Endlosfasern oder als geschnittene oder gemahlene Glasfasern eingesetzt werden.

Die Glasfasern selbst, unabhängig von deren Querschnittfläche und deren Länge, können dabei beispielsweise ausgewählt sein aus der Gruppe der E-Glasfasern, A-Glasfasern, C-Glasfasern, D-Glasfasern, M-Glasfasern, S-Glasfasern, R-Glasfasern und/oder ECR-Glasfasern, wobei die E-Glasfasern, R-Glasfasern, S-Glasfasern und ECR-Glasfasern besonders bevorzugt sind. Die Glasfasern sind vorzugsweise mit einer Schlichte versehen, welche vorzugsweise Polyurethan als Filmbildner und Aminosilan als Haftvermittler enthält.

Besonders bevorzugt eingesetzte E-Glasfasern weisen folgende chemische Zusammensetzung auf: $SiO_2$ 50-56 %; $Al_2O_3$ 12-16 %; CaO 16-25 %; MgO $\leq$ 6 %; $B_2O_3$ 6-13 %; F $\leq$ 0,7 %; $Na_2O$ 0,3-2 %; $K_2O$ 0,2-0,5 %; $Fe_2O_3$ 0,3 %.

Besonders bevorzugt eingesetzte R-Glasfasern weisen folgende chemische Zusammensetzung auf: $SiO_2$ 50-65 %; $Al_2O_3$ 20-30 %; CaO 6-16 %; MgO 5-20 %; $Na_2O$ 0,3-0,5 %; $K_2O$ 0,05-0,2 %; $Fe_2O_3$ 0,2-0,4 %, $TiO_2$ 0,1-0,3 %.

Besonders bevorzugt eingesetzte ECR-Glasfasern weisen folgende chemische Zusammensetzung auf: $SiO_2$ 57,5-58,5 %; $Al_2O_3$ 17,5-19,0 %; CaO 11,5-13,0 %; MgO 9,5-11,5.

Die erfindungsgemäß als Komponente C eingesetzten Salze von Diethylphosphinsäure sind bekannte Flammschutzmittel für polymere Formmassen.

Auch Salze von Diethylphosphinsäure mit Anteilen der erfindungsgemäß als Komponente E eingesetzten Monoethylphosphinsäuresalze sind bekannte Flammschutzmittel. Diese Stoffkombinationen werden z. B. in der DE 102010018682 A1 beschrieben.

Die erfindungsgemäß eingesetzten Salze von Diethylphosphinsäure der Komponente C enthalten geringe Mengen an Salzen der Komponente D und gegebenenfalls Salze von Monoethylphosphonsäure der Komponente F, beispielsweise bis zu 10 Gew.-% an Komponente D, vorzugsweise 0,01 bis 6 Gew. %, und insbesondere 0,2 bis 2,5 Gew.-% davon, und bis zu 25 Gew.-% an Komponente F, vorzugsweise 1 bis 20 Gew. %, und insbesondere 2 bis 15 Gew.-% davon bezogen auf die Menge an Komponenten C, D und E.

Die erfindungsgemäß als Komponente D eingesetzten Salze von Phosphinsäurederivaten sind als Zusätze zu Diethylphospinaten in Flammschutzmitteln für polymere Formmassen ebenfalls bekannt, beispielsweise aus US 7,420,007 B2.

Die erfindungsgemäß als Komponente F eingesetzten Salze der Ethylphosphonsäure sind als Zusätze zu Diethylphospinaten in Flammschutzmitteln für polymere Formmassen ebenfalls bekannt, beispielsweise aus WO 2016/065971 A1.

In einer weiteren bevorzugten Ausführungsform liegen Komponenten C, D und E in Teilchenform vor, wobei die mittlere Teilchengröße ($d_{50}$) 1 bis 100 $\mu$m beträgt.

Die erfindungsgemäßen Polyamidzusammensetzungen können als Komponente H noch weitere Additive enthalten. Bevorzugte Komponenten G im Sinne der vorliegenden Erfindung sind Antioxidantien, UV-Stabilisatoren, Gammastrahlenstabilisatoren, Hydrolysestabilisatoren, Co-Stabilisatoren für Antioxidantien, Antistatika, Emulgatoren, Nukleierungsmittel, Weichmacher, Verarbeitungs-hilfsmittel, Schlagzähmodifikatoren, Farbstoffe, Pigmente und/oder weitere Flammschutzmittel, die sich von Komponenten C, D, E, F und G unterscheiden.

Die weiteren Additive sind als Zusätze zu Polyamidzusammensetzungen an sich bekannt und können alleine oder in Mischung oder in Form von Masterbatches eingesetzt werden.

Die vorgenannten Komponenten A, B, C, D, E und gegebenenfalls F und/oder G und/oder H können in den verschiedensten Kombinationen zur erfindungsgemäßen flammgeschützten Polyamidzusammensetzung verarbeitet werden. So ist es möglich, bereits zu Beginn oder am Ende der Polykondensation oder in einem folgenden Compoundierprozess die Komponenten in die Polyamidschmelze einzumischen. Weiterhin gibt es Verarbeitungsprozesse bei denen einzelne Komponenten erst später zugefügt werden. Dies wird insbesondere beim Einsatz von Pigment- oder Additivmasterbatches praktiziert. Außerdem besteht die Möglichkeit, insbesondere pulverförmige Komponenten auf das durch den Trocknungsprozess eventuell warme Polymergranulat aufzutrommeln.

Auch können zwei oder mehrere der Komponenten der erfindungsgemäßen Polyamidzusammensetzungen vor dem Einbringen in die Polyamidmatrix durch Vermischen kombiniert werden. Dabei können herkömmliche Mischaggregate eingesetzt werden, in denen die Komponenten in einem geeigneten Mischer, z. B. 0,01 bis 10 Stunden bei 0 bis 300 °C gemischt werden.

Aus zwei oder mehreren der Komponenten der erfindungsgemäßen Polyamidzusammensetzungen können auch Granulate hergestellt werden, die anschließend in die Polyamidmatrix eingebracht werden können.

Dazu können zwei oder mehr Komponenten der erfindungsgemäßen Polyamidzusammensetzung mit Granulierhilfsmittel und/oder Bindemittel in einem geeigneten Mischer oder einem Granulierteller zu Granulaten verarbeitet werden.

Das zunächst entstehende Rohprodukt kann in einem geeigneten Trockner getrocknet beziehungsweise zum weiteren Kornaufbau getempert werden.

Die erfindungsgemäße Polyamidzusammensetzung oder zwei oder mehrere Komponenten davon kann in einer Ausführungsform durch Rollkompaktierung hergestellt werden.

Die erfindungsgemäße Polyamidzusammensetzung oder zwei oder mehrere Komponenten davon kann in einer Ausführungsform dadurch hergestellt werden, dass die Inhaltsstoffe gemischt, stranggepresst, abgeschlagen (bzw. gegebenenfalls gebrochen und klassiert) und getrocknet (und gegebenenfalls gecoated) werden.

Die erfindungsgemäße Polyamidzusammensetzung oder zwei oder mehrere Komponenten davon kann in einer Ausführungsform durch Sprühgranulierung hergestellt werden.

Die erfindungsgemäße flammgeschützte Polymerformmasse liegt bevorzugt in Granulatform, z. B. als Extrudat oder als Compound, vor. Das Granulat hat bevorzugt Zylinderform mit kreisförmiger, elliptischer oder unregelmäßiger Grundfläche, Kugelform, Kissenform, Würfelform, Quaderform, Prismenform.

Typische Längen-zu-Durchmesser-Verhältnis des Granulates betragen 1 zu 50 bis 50 zu 1, bevorzugt 1 zu 5 bis 5 zu 1.

Das Granulat hat bevorzugt einen Durchmesser von 0,5 bis 15 mm, besonders bevorzugt von 2 bis 3 mm und bevorzugt eine Länge von 0,5 bis 15 mm, besonders bevorzugt von 2 bis 5 mm.

Gegenstand der Erfindung sind auch Formteile hergestellt aus der oben beschriebenen flammhemmenden Polyamidzusammensetzung enthaltend die Komponenten A, B, C, D, E und gegebenenfalls Komponente F und/oder Komponente G und/oder Komponente H.

Bei den erfindungsgemäßen Formteilen kann es sich um beliebige Ausformungen handeln. Beispiele dafür sind Fasern, Folien oder Formkörper, erhältlich aus den erfindungsgemäßen flammgeschützten Polyamidformmassen durch beliebige Formverfahren, insbesondere durch Spritzguss oder Extrusion.

Die Herstellung der erfindungsgemäßen flammgeschützten Polyamid-Formkörper kann durch beliebige Formverfahren erfolgen. Beispiele dafür sind Spritzgießen, Pressen, Schaumspritzgießen, Gasinnendruck-Spritzgießen, Blasformen, Foliengießen, Kalandern, Laminieren oder Beschichten bei höheren Temperaturen mit der flammgeschützten Polyamid-Formmasse.

Bei den Formteilen handelt es sich vorzugsweise sich um Spritzgussteile oder um Extrusionsteile.

Die erfindungsgemäßen flammgeschützten Polyamidzusammensetzungen eignen sich zur Herstellung von Fasern, Folien und Formkörpern, insbesondere für Anwendungen im Elektro- und Elektronikbereich.

Die Erfindung betrifft bevorzugt die Verwendung der erfindungsgemäßen flammgeschützten Polyamidzusammensetzungen in oder für Steckverbinder, stromberührten Teilen in Stromverteilern (FI-Schutz), Platinen, Vergussmassen, Stromsteckern, Schutzschaltern, Lampengehäusen, LED Gehäusen, Kondensatorgehäusen, Spulenkörpern und Ventilatoren, Schutzkontakten, Steckern, in/auf Platinen, Gehäusen für Stecker, Kabeln, flexiblen Leiterplatten, Ladekabeln für Handys, Motorabdeckungen oder Textilbeschichtungen.

Die Erfindung betrifft ebenfalls bevorzugt die Verwendung der erfindungsgemäßen flammgeschützten Polyamidzusammensetzungen zur Herstellung von Formkörpern in Form von Bauteilen für den Elektro/Elektronikbereich,

insbesondere für Teile von Leiterplatten, Gehäusen, Folien, Leitungen, Schaltern, Verteilern, Relais, Widerständen, Kondensatoren, Spulen, Lampen, Dioden, LED, Transistoren, Konnektoren, Reglern, Speichern und Sensoren, in Form von großflächigen Bauteilen, insbesondere von Gehäuseteilen für Schaltschränke und in Form aufwendig gestalteter Bauteile mit anspruchsvoller Geometrie.

Die Wandstärke der erfindungsgemäßen Formkörper kann typischerweise bis zu 10 mm betragen. Besonders geeignet sind Formkörper mit weniger als 1,5 mm Wandstärke, mehr bevorzugt von weniger als 1 mm Wandstärke und besonders bevorzugt von weniger als 0,5 mm Wandstärke.

Die nachfolgenden Beispiele erläutern die Erfindung.

1. Eingesetzte Komponenten

Handelsübliche Polyamide (Komponente A bzw. Vergleich):

Polyamid 6T/6.6 (Schmelzbereich von 310-320 °C): Vestamid® HAT plus 1000 (Evonik)
Polyamid 6T/6I (amorph): Grivory® G21, (EMS)
Polyamid 6.6 (PA 6.6-GV; Schmelzbereich von 255-260 °C): Ultramid® A27 (BASF)

Glasfasern (Komponente B):

Glasfasern PPG HP 3610 10μm Durchmesser, 4,5 mm Länge (Fa. PPG, NL)

Flammschutzmittel FM 1 (Komponente C):
Aluminiumsalz der Diethylphosphinsäure hergestellt in Analogie zu Beispiel 1 der DE 196 07 635 A1

Flammschutzmittel FM 2 (Komponenten C und D):
Aluminiumsalz der Diethylphosphinsäure enthaltend 0,9 mol % an Aluminium-Ethylbutylphospinat hergestellt in Analogie zu Beispiel 1 der DE 10 2014 001 222 A1

Flammschutzmittel FM 3 (Komponenten C, D und F):
Aluminiumsalz der Diethylphosphinsäure enthaltend 0,9 mol % an Aluminium-Ethylbutylphospinat und 0,5 mol % an Aluminium-Ethylphosphonat hergestellt nach Beispiel 3 der US 7,420,007 B2

Flammschutzmittel FM 4 (Komponenten C, D und F):
Aluminiumsalz der Diethylphosphinsäure enthaltend 2,7 mol % an Aluminium-Ethylbutylphospinat und 0,8 mol % an Aluminium-Ethylphosphonat hergestellt nach Beispiel 4 der US 7,420,007 B2

Flammschutzmittel FM 5 (Komponenten C, D und F):
Aluminiumsalz der Diethylphosphinsäure enthaltend 0,5 mol % an Aluminium-Ethylbutylphospinat und 0,05 mol % an Aluminium-Ethylphosphonat hergestellt nach dem Verfahren gemäß US 7,420,007 B2

Flammschutzmittel FM 6 (Komponenten C, D und F):
Aluminiumsalz der Diethylphosphinsäure enthaltend 10 mol % an Aluminium-Ethylbutylphospinat und 5 mol % an Aluminium-Ethylphosphonat hergestellt nach dem Verfahren gemäß US 7,420,007 B2

Flammschutzmittel FM 7 (Komponente E):
Aluminiumsalz der Monoethylphosphinsäure hergestellt nach Beispiel 18 der DE 10 2010 018 682 A1

Flammschutzmittel FM 8 (Komponente G):
Aluminiumsalz der Phosphonsäure hergestellt nach Beispiel 1 der DE 102011120218 A1

2. Herstellung, Verarbeitung und Prüfung von flammhemmenden Polyamid-Formmassen

Die Flammschutzmittelkomponenten wurden in dem in den Tabellen angegebenen Verhältnissen miteinander vermischt und über den Seiteneinzug eines Doppelschnecken-Extruders (Typ Leistritz ZSE 27/44D) bei Temperaturen von 310 bis 330 °C eingearbeitet. Die Glasfasern wurden über einen zweiten Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 300 bis 320 °C zu Prüfkörpern verarbeitet und anhand des UL 94-Tests (Underwriter Laboratories) auf Flammwidrigkeit geprüft und klassifiziert. Neben der Klassifikation wurde auch die Nachbrennzeit angegeben.

Der Comparative Tracking Index der Formteile wurde gemäß dem International Electrotechnical Commission Standard IEC-60112/3 ermittelt.

Der Glow Wire Flammability Index (GWIT-Index) wurde nach der Norm IEC-60695-2-12 ermittelt.

Die Wärmeformbeständigkeitstemperatur (HDT-A) wurde nach DIN EN ISO 75-3 ermittelt.

Bei der Ermittlung der HDT wird ein Standardprobekörper mit rechteckigem Querschnitt einer Dreipunktbiegung bei konstanter Last ausgesetzt. Je nach Probekörperhöhe wird dabei zur Erzielung einer sogenannten Randfaserspannung $\sigma_f$ von 1,80 (Methode A), 0,45 (Methode B) oder 8,00 $N/mm^2$ (Methode C) durch Gewichtsstücke und/oder Federn einer Kraft aufgebracht. Anschließend werden die belasteten Proben einer Erwärmung mit konstanter Heizrate von 120 K/h (oder 50 K/h) ausgesetzt. Erreicht dabei die Durchbiegung der Probe eine Randfaserdehnung von 0,2 %, so entspricht die zugehörige Temperatur dem HDT-Wert.

Die Fließfähigkeit der Formmassen wurde durch Ermittlung des Schmelzvolumenindex (MVR) bei 275 °C/2,16 kg bestimmt. Ein starker Anstieg des MVR-Wertes deutet auf einen Polymerabbau hin.

Zur Bestimmung der Ausblühungen wurde der Polymerstrang 14 Tage bei 100 %-iger Feuchte bei 70 °C gelagert und anschließend visuell beurteilt. Dabei bedeuteten: 1 = keine Ausblühungen, 2 = geringe Ausblühungen, 3 = deutliche Ausblühungen, 4 = starke Ausblühungen.

Sämtliche Versuche der jeweiligen Serie wurden, falls keine anderen Angaben gemacht wurden, aufgrund der Vergleichbarkeit unter identischen Bedingungen (wie Temperaturprogramme, Schneckengeometrien und Spritzgießparameter) durchgeführt.

Beispiele 1-6 und Vergleichsbeispiele V1-V8 mit PA 6T/6.6

Die Ergebnisse der Versuche mit PA 6T/6.6-Formmassen sind in den in der nachfolgenden Tabelle aufgeführten Beispielen aufgelistet. Alle Mengen sind als Gew.-% angegeben und beziehen sich auf die Polyamid-Formmasse einschließlich der Flammschutzmittel, Additive und Verstärkungsstoffe.

Tabelle 1: PA 6T/6.6 GF 30 Versuchsergebnisse (1-6 erfindungsgemäß; V1-V8 Vergleiche)

| Beispiel Nr. | 1 | 2 | 3 | 4 | 5 | 6 | V1 | V2 | V3 | V4 | V5 | V6 | V7 | V8 |
|---|---|---|---|---|---|---|---|---|---|---|---|---|---|---|
| A: PA 6T/6.6 | 54,5 | 54,5 | 54,5 | 54,1 | 54,5 | 54,5 | 55 | 55 | 55 | 54,5 | 55 | 55 | 55 | 55 |
| B: Glasfasern HP3610 | 30 | 30 | 30 | 30 | 30 | 30 | 30 | 30 | 30 | 30 | 30 | 30 | 30 | 30 |
| C: FM 1 | - | - | - | - | - | - | 15 | 15 | - | 15 | - | - | - | - |
| C+D: FM 2 | 15 | - | - | - | - | 12 | - | - | 15 | - | - | - | - | - |
| C+D+F: FM 3 | - | 15 | - | - | - | - | - | - | - | - | 15 | - | - | - |
| C+D+F: FM 4 | - | - | 15 | - | - | - | - | - | - | - | - | 15 | - | - |
| C+D+F: FM 5 | - | - | - | 15 | - | - | - | - | - | - | - | - | 15 | - |
| C+D+F: FM 6 | - | - | - | - | 15 | - | - | - | - | - | - | - | - | 15 |
| E: FM 7 | 0,5 | 0,5 | 0,5 | 0,9 | 0,5 | 0,5 | 0,5 | - | - | 0,5 | - | - | - | - |
| G: FM 8 | - | - | - | - | - | 3 | - | - | - | - | - | - | - | - |
| HDT-A [ °C] | 307 | 305 | 307 | 299 | 304 | 306 | 299 | 297 | 300 | 301 | 303 | 298 | 299 | 300 |
| UL 94 0,4 mm / Zeit [sek.] | V-0/19 | V-0/10 | V-0/12 | V-0/17 | V-0/23 | V-0/08 | V-1/58 | V-1/69 | V-0/48 | V-1/77 | V-1/67 | V-0/43 | V-1/67 | V-1/87 |
| GWFI [°C] | 960 | 960 | 960 | 960 | 960 | 960 | 960 | 960 | 960 | 960 | 960 | 960 | 900 | 960 |
| CTI [Volt] | 600 | 600 | 600 | 600 | 600 | 600 | 550 | 500 | 550 | 550 | 500 | 550 | 550 | 550 |
| MVR [$cm^3$/10 min. | 12 | 11 | 12 | 14 | 11 | 9 | 11 | 17 | 19 | 18 | 18 | 19 | 18 | 19 |
| Ausblühungen | 1 | 1 | 1 | 1 | 1 | 1 | 2 | 2 | 2 | 2 | 2 | 2 | 2 | 2 |

Nur mit den erfindungsgemäßen Mischungen wird eine hohe HDT-A, UL 94 V-0, GFWI 960, geringe Ausblühungen und geringer Polymerabbau, erkenntlich an geringem MVR, erreicht

Beispiele 7-12 und Vergleichsbeispiele V9-V16 mit PA 6T/6I

Die Ergebnisse der Versuche mit PA 6T/61-Formmassen sind in den in der nachfolgenden Tabelle aufgeführten Beispielen aufgelistet. Alle Mengen sind als Gew.-% angegeben und beziehen sich auf die Polyamid-Formmasse einschließlich der Flammschutzmittel, Additive und Verstärkungsstoffe.

Tabelle 2: PA 6T/6I GF 30 Versuchsergebnisse (7-12 erfindungsgemäß; V9-V16 Vergleiche)

| Beispiel Nr. | 7 | 8 | 9 | 10 | 11 | 12 | V9 | V10 | V11 | V12 | V13 | V14 | V15 | V16 |
|---|---|---|---|---|---|---|---|---|---|---|---|---|---|---|
| A: PA 6T/6I | 54,5 | 54,5 | 54,5 | 54,5 | 54,5 | 54,5 | 54,5 | 55 | 55 | 54,5 | 55 | 55 | 55 | 55 |
| B: Glasfasern HP3610 | 30 | 30 | 30 | 30 | 30 | 30 | 30 | 30 | 30 | 30 | 30 | 30 | 30 | 30 |
| C: FM 1 | - | - | - | - | - | - | 15 | 15 | - | 15 | - | - | - | - |
| C+D: FM 2 | 15 | - | - | - | - | 13 | - | - | 15 | - | - | - | - | - |
| C+D+F: FM 3 | - | 15 | - | - | - | - | - | - | - | - | 15 | - | - | - |
| C+D+F: FM 4 | - | - | 15 | - | - | - | - | - | - | - | - | 15 | - | - |
| C+D+F: FM 5 | - | - | - | 15 | - | - | - | - | - | - | - | - | 15 | - |
| C+D+F: FM 6 | - | - | - | - | 15 | - | - | - | - | - | - | - | - | 15 |
| E: FM 7 | 0,5 | 0,5 | 0,5 | 0,5 | 0,5 | 0,5 | 0,5 | - | - | 0,5 | - | - | - | - |
| G: FM 8 | - | - | - | - | - | 2 | - | - | - | - | - | - | - | - |
| HDT-A [°C] | 307 | 306 | 308 | 306 | 301 | 303 | 298 | 289 | 296 | 287 | 300 | 289 | 299 | 299 |
| UL 94 0,4 mm / Zeit [sek.] | V-0/30 | V-0/22 | V-0/28 | V-0/31 | V-0/15 | V-0/19 | V-1/76 | V-1/53 | V-0/48 | V-1/98 | V-1/78 | V-1/84 | V-0/49 | V-1/56 |
| GWFI [°C] | 960 | 960 | 960 | 960 | 960 | 960 | 960 | 900 | 960 | 960 | 900 | 850 | 960 | 960 |
| CTI [Volt] | 600 | 600 | 600 | 600 | 600 | 600 | 600 | 550 | 550 | 500 | 575 | 550 | 500 | 550 |
| MVR [$cm^3$/10 min | 7 | 8 | 6 | 9 | 7 | 8 | 12 | 18 | 15 | 17 | 23 | 14 | 13 | 18 |
| Ausblühungen | 1 | 1 | 1 | 1 | 1 | 1 | 1 | 1 | 2 | 2 | 2 | 2 | 2 | 2 |

Nur mit den erfindungsgemäßen Mischungen wird eine hohe HDT-A, UL 94 V-0, GFWI 960, geringe Ausblühungen und geringer Polymerabbau, erkenntlich an geringem MVR, erreicht

Vergleichsbeispiele V17-V23 mit PA 6.6

Die Ergebnisse der Versuche mit PA 6.6-Formmassen sind in den in der nachfolgenden Tabelle aufgeführten Beispielen aufgelistet. Alle Mengen sind als Gew.-% angegeben und beziehen sich auf die Polyamid-Formmasse einschließlich der Flammschutzmittel, Additive und Verstärkungsstoffe.

Bei der Herstellung der Formmassen wurde ebenfalls ein DoppelschneckenExtruder vom Typ Leistritz ZSE 27/44D verwendet. Allerdings erfolgte die Einarbeitung der Zusätze in das PA 6.6 bei Temperaturen von 260 bis 310 °C. Die Glasfasern wurden über einen zweiten Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 250 bis 320 °C zu Prüfkörpern verarbeitet und anschließend geprüft und klassifiziert.

Tabelle 3: PA 6.6 GF 30 Versuchsergebnisse (V17-V23 Vergleiche)

| Beispiel Nr. | V17 | V18 | V19 | V20 | V21 | V22 | V23 |
|---|---|---|---|---|---|---|---|
| A: PA 6.6 | 49,5 | 49,5 | 49,5 | 49,5 | 49,5 | 49,5 | 49,5 |
| B: Glasfasern HP3610 | 30 | 30 | 30 | 30 | 30 | 30 | 30 |
| C: FM 1 | 20 | - | - | - | - | - | - |
| C+D: FM 2 | - | 20 | - | - | - | - | 20 |
| C+D+F: FM 3 | - | - | 20 | - | - | - | - |
| C+D+F: FM 4 | - | - | - | 20 | - | - | - |
| C+D+F: FM 5 | - | - | - | - | 20 | - | - |
| C+D+F: FM 6 | - | - | - | - | - | 20 | - |
| E: FM 7 | 0,5 | 0,5 | 0,5 | 0,5 | 0,5 | 0,5 | - |
| HDT-A [°C] | 220 | 221 | 215 | 220 | 222 | 230 | 220 |
| UL 94 0,4 mm / Zeit [sek.] | V-0/45 | V-1/63 | V-1/72 | V-0/49 | V-1/87 | V-1/92 | V1/99 |
| GWFI [°C] | 960 | 960 | 960 | 960 | 960 | 960 | 960 |
| CTI [Volt] | 600 | 600 | 600 | 600 | 550 | 600 | 500 |
| MVR [$cm^3$/10 min | 14 | 13 | 15 | 14 | 13 | 17 | 23 |
| Ausblühungen | 2 | 2 | 1 | 1 | 1 | 1 | 1 |

Mit einem Polyamid mit Schmelzpunkt kleiner 290 °C (PA 6.6: 260 °C) kann keine Polyamidzusammensetzung mit einer HDTA von mindestens 280 °C erreicht werden. Zudem wird hier UL 94 V-0 nicht erreicht.

## Patentansprüche

**1.** Flammhemmende Polyamidzusammensetzungen mit einer Wärmeformbeständigkeitstemperatur HDT-A von mindestens 280 °C enthaltend

- Polyamid mit einem Schmelzpunkt von größer gleich 290 °C als Komponente A,
- Füllstoffe und/oder Verstärkungsstoffe als Komponente B,
- Phosphinsäuresalz der Formel (I) als Komponente C

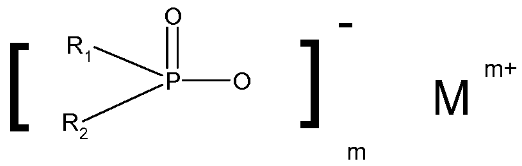 (I),

worin $R_1$ und $R_2$ Ethyl bedeuten,
M Al, Fe, $TiO_p$ oder Zn ist,
m 2 bis 3 bedeutet, und

$$p = (4 - m) / 2$$

ist

- Verbindung ausgewählt aus der Gruppe der Al-, Fe-, $TiO_p$- oder Zn-Salze der Ethylbutylphosphinsäure, der Dibutylphosphinsäure, der Ethylhexylphosphinsäure, der Butylhexylphosphinsäure und/oder der Dihexylphosphinsäure als Komponente D, und
- Monoethylphosphinsäuresalz der Formel II als Komponente E

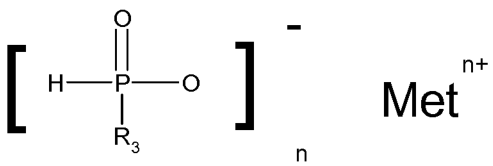 (II),

worin $R_3$ Ethyl bedeutet,
Met Al, Fe, $TiO_q$ oder Zn ist,
n 2 bis 3 bedeutet, und

$$q = (4 - n) / 2$$

ist.

2. Flammhemmende Polyamidzusammensetzungen nach Anspruch 1, **dadurch gekennzeichnet, dass** M und Met Al bedeuten, m und n 3 sind und dass Komponente D ein Aluminiumsalz ist.

3. Flammhemmende Polyamidzusammensetzungen nach mindestens einem der Ansprüche 1 bis 2, **dadurch gekennzeichnet, dass**

   - der Anteil von Komponente A 25 bis 95 Gew.-%,
   - der Anteil von Komponente B 1 bis 45 Gew.-%,
   - der Anteil von Komponente C 0,75 bis 30 Gew.-%,
   - der Anteil von Komponente D 0,01 bis 3 Gew.-%, und
   - der Anteil von Komponente E 0,01 bis 2 Gew.-% beträgt,

   wobei die Prozentangaben sich auf die Gesamtmenge der Polyamidzusammensetzung beziehen.

4. Flammhemmende Polyamidzusammensetzungen nach Anspruch 3, **dadurch gekennzeichnet, dass**

   - der Anteil von Komponente A 25 bis 75 Gew.-%,
   - der Anteil von Komponente B 20 bis 40 Gew.-%,
   - der Anteil von Komponente C 5 bis 20 Gew.-%,
   - der Anteil von Komponente D 0,05 bis 1,5 Gew.-%, und
   - der Anteil von Komponente E 0,01 bis 0,5 Gew.-% beträgt,

wobei die Prozentangaben sich auf die Gesamtmenge der Polyamidzusammensetzung beziehen.

5. Flammhemmende Polyamidzusammensetzungen nach mindestens einem der Ansprüche 1 bis 4, **dadurch gekennzeichnet, dass** diese als weitere Komponente F ein Phosphonsäuresalz der Formel (IX) enthalten

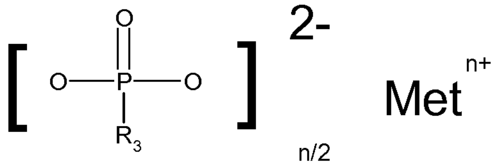 (IX),

worin $R_3$ Ethyl bedeutet,
Met Al, Fe, $TiO_q$ oder Zn ist,
n 2 bis < 4 bedeutet, und

$$q = (4 - n) / 2$$

ist,
wobei Komponente F in einer Menge von 0,005 bis 1 Gew.-%, insbesondere in einer Menge von 0,01 bis 0,5 Gew.-%, bezogen auf die Gesamtmenge der Polyamidzusammensetzung, vorliegt.

6. Flammhemmende Polyamidzusammensetzungen nach mindestens einem der Ansprüche 1 bis 6, **dadurch gekennzeichnet, dass** diese als weitere Komponente G ein anorganisches Phosphonat enthalten.

7. Flammhemmende Polyamidzusammensetzungen nach Anspruch 6, **dadurch gekennzeichnet, dass** das anorganische Phosphonat eine Verbindung der Formel (III) ist

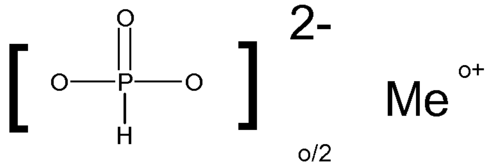 (III),

worin Me Fe, $TiO_r$, Zn oder insbesondere Al ist,
o 2 bis 3, bedeutet, und

$$r = (4 - o) / 2$$

ist,
wobei die Verbindung der Formel (III) in einer Menge von 0,005 bis 10 Gew.-%, insbesondere in einer Menge von 0,02 bis 5 Gew.-%, bezogen auf die Gesamtmenge der Polyamidzusammensetzung, vorliegt.

8. Flammhemmende Polyamidzusammensetzungen nach mindestens einem der Ansprüche 1 bis 7, **dadurch gekennzeichnet, dass** diese einen Comparative Tracking Index aufweist gemessen nach der International Electrotechnical Commission Standard IEC-60112/3 von größer gleich 500 Volt aufweisen.

9. Flammhemmende Polyamidzusammensetzungen nach mindestens einem der Ansprüche 1 bis 8, **dadurch gekennzeichnet, dass** diese eine Bewertung von V0 nach UL-94 von 3.2 mm bis 0,4 mm Dicke erreichen.

10. Flammhemmende Polyamidzusammensetzungen nach mindestens einem der Ansprüche 1 bis 9, **dadurch gekennzeichnet, dass** diese eine HDT-A nach DIN EN ISO 75-3 von mindestens 300 °C aufweisen.

11. Flammhemmende Polyamidzusammensetzungen nach mindestens einem der Ansprüche 1 bis 10, **dadurch gekennzeichnet, dass** es sich bei Komponente A um ein aromatisches oder teilaromatisches Polyamid oder ein

Gemisch aus mehreren aromatischen oder teilaromatischen Polyamiden oder um ein Gemisch aus Polyamid 6.6 und einem oder mehreren aromatischen oder teilaromatischen Polyamiden handelt.

**12.** Flammhemmende Polyamidzusammensetzungen nach Anspruch 11, **dadurch gekennzeichnet, dass** es sich bei Komponente A um ein aromatisches oder teilaromatisches Polyamid oder ein Gemisch aus mehreren aromatischen oder teilaromatischen Polyamiden handelt.

**13.** Flammhemmende Polyamidzusammensetzungen nach mindestens einem der Ansprüche 1 bis 12, **dadurch gekennzeichnet, dass** als Komponente B Glasfasern eingesetzt werden.

**14.** Flammhemmende Polyamidzusammensetzungen nach mindestens einem der Ansprüche 1 bis 13, **dadurch gekennzeichnet, dass** Komponenten C, D und E in Teilchenform vorliegen, wobei die mittlere Teilchengröße $d_{50}$ dieser Komponenten 1 bis 100 $\mu$m beträgt.

**15.** Flammhemmende Polyamidzusammensetzungen nach mindestens einem der Ansprüche 1 bis 14, **dadurch gekennzeichnet, dass** diese weitere Additive als Komponente H enthält, wobei die weiteren Additive ausgewählt sind aus der Gruppe bestehend aus Antioxidantien, UV-Stabilisatoren, Gammastrahlenstabilisatoren, Hydrolysestabilisatoren, Co-Stabilisatoren für Antioxidantien, Antistatika, Emulgatoren, Nukleierungsmitteln, Weichmachern, Verarbeitungshilfsmitteln, Schlagzähmodifikatoren, Farbstoffen, Pigmenten und/oder weiteren Flammschutzmitteln, die sich von Komponenten C, D, E, F und G unterscheiden .

**16.** Verwendung der Polyamidzusammensetzungen nach einem der Ansprüche 1 bis 15 zur Herstellung von Fasern, Folien und Formkörpern, insbesondere für Anwendungen im Elektro- und Elektronikbereich.

## Claims

**1.** Flame-retardant polyamide compositions having a heat deflection temperature HDT-A of at least 280°C, comprising

- polyamide having a melting point of not less than 290°C as component A,
- fillers and/or reinforcers as component B,
- phosphinic salt of the formula (I) as component C

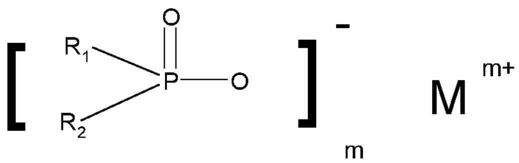 (I),

in which $R_1$ and $R_2$ are ethyl,
M is Al, Fe, $TiO_p$ or Zn,
m is 2 to 3, and

$$p = (4 - m) / 2$$

- compound selected from the group of the Al, Fe, $TiO_p$ and Zn salts of ethylbutylphosphinic acid, of dibutylphosphinic acid, of ethylhexylphosphinic acid, of butylhexylphosphinic acid and/or of dihexylphosphinic acid as component D, and
- monoethylphosphinic salt of the formula II as component E

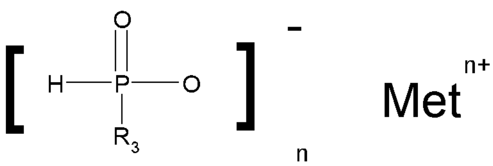 (II),

in which $R_3$ is ethyl,
Met is Al, Fe, $TiO_q$ or Zn,
n is 2 to 3, and

$$q = (4 - n) / 2.$$

2. Flame-retardant polyamide compositions according to Claim 1, **characterized in that** M and Met are Al, m and n are 3, and **in that** component D is an aluminum salt.

3. Flame-retardant polyamide compositions according to at least one of Claims 1 and 2, **characterized in that**

- the proportion of component A is 25% to 95% by weight,
- the proportion of component B is 1% to 45% by weight,
- the proportion of component C is 0.75% to 30% by weight,
- the proportion of component D is 0.01% to 3% by weight, and
- the proportion of component E is 0.01% to 2% by weight,

where the percentages are based on the total amount of the polyamide composition.

4. Flame-retardant polyamide compositions according to Claim 3, **characterized in that**

- the proportion of component A is 25% to 75% by weight,
- the proportion of component B is 20% to 40% by weight,
- the proportion of component C is 5% to 20% by weight,
- the proportion of component D is 0.05% to 1.5% by weight, and
- the proportion of component E is 0.01% to 0.5% by weight,

where the percentages are based on the total amount of the polyamide composition.

5. Flame-retardant polyamide compositions according to at least one of Claims 1 to 4, **characterized in that** they comprise, as a further component F, a phosphonic salt of the formula (IX)

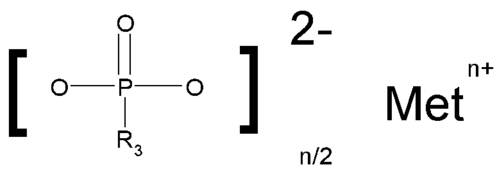

(IX),

in which $R_3$ is ethyl,
Met is Al, Fe, $TiO_q$ or Zn,
n is 2 to < 4, and

$$q = (4 - n) / 2,$$

where component F is present in an amount of 0.005% to 1% by weight, especially in an amount of 0.01% to 0.5% by weight, based on the total amount of the polyamide composition.

6. Flame-retardant polyamide compositions according to at least one of Claims 1 to 6, **characterized in that** they comprise, as a further component G, an inorganic phosphonate.

7. Flame-retardant polyamide compositions according to Claim 6, **characterized in that** the inorganic phosphonate is a compound of the formula (III)

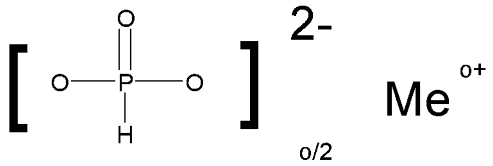 (III),

in which Me is Fe, $TiO_r$, Zn or especially Al,
o is 2 to 3, and

$$r = (4 - o) / 2,$$

where the compound of the formula (III) is present in an amount of 0.005% to 10% by weight, especially in an amount of 0.02% to 5% by weight, based on the total amount of the polyamide composition.

**8.** Flame-retardant polyamide compositions according to at least one of Claims 1 to 7, **characterized in that** they have a comparative tracking index measured by International Electrotechnical Commission Standard IEC-60112/3 of not less than 500 volts.

**9.** Flame-retardant polyamide compositions according to at least one of Claims 1 to 8, **characterized in that** they attain a V-0 assessment according to UL94 from thickness 3.2 mm to 0.4 mm.

**10.** Flame-retardant polyamide compositions according to at least one of Claims 1 to 9, **characterized in that** they have an HDT-A according to DIN EN ISO 75-3 of at least 300°C.

**11.** Flame-retardant polyamide compositions according to at least one of Claims 1 to 10, **characterized in that** component A is an aromatic or semiaromatic polyamide or a mixture of two or more aromatic or semiaromatic polyamides or a mixture of nylon-6,6 and one or more aromatic or semiaromatic polyamides.

**12.** Flame-retardant polyamide compositions according to Claim 11, **characterized in that** component A is an aromatic or semiaromatic polyamide or a mixture of two or more aromatic or semiaromatic polyamides.

**13.** Flame-retardant polyamide compositions according to at least one of Claims 1 to 12, **characterized in that** glass fibers are used as component B.

**14.** Flame-retardant polyamide compositions according to at least one of Claims 1 to 13, **characterized in that** components C, D and E are in particulate form, where the median particle size dso of these components is 1 to 100 µm.

**15.** Flame-retardant polyamide compositions according to at least one of Claims 1 to 14, **characterized in that** they comprise further additives as component H, where the further additives are selected from the group consisting of antioxidants, UV stabilizers, gamma ray stabilizers, hydrolysis stabilizers, costabilizers for antioxidants, antistats, emulsifiers, nucleating agents, plasticizers, processing auxiliaries, impact modifiers, dyes, pigments and/or further flame retardants other than components C, D, E, F and G.

**16.** Use of the polyamide compositions according to any of Claims 1 to 15 for production of fibers, films and shaped bodies, especially for applications in the electricals and electronics sector.

## Revendications

**1.** Compositions de polyamide ignifuges ayant une température de déformation à la chaleur HDT-A d'au moins 280 °C, contenant

- un polyamide ayant un point de fusion supérieur ou égal à 290 °C, en tant que composant A,
- des charges et/ou matières de renforcement en tant que composant B,
- un sel d'acide phosphinique de formule (I) en tant que composant C

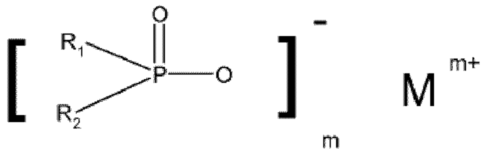 (I),

formule dans laquelle $R_1$ et $R_2$ représentent un groupe éthyle,
M est Al, Fe, $TiO_p$ ou Zn,
m représente 2 à 3, et

$$p = (4-m)/2$$

- un composé choisi dans le groupe des sels d'Al, de Fe, $TiO_p$ ou Zn de l'acide éthylbutylphosphinique, de l'acide dibutylphosphinique, de l'acide éthylhexylphosphinique, de l'acide butylhexylphosphinique et/ou de l'acide dihexylphosphinique, en tant que composant D, et
- un sel d'acide monoéthylphosphinique de formule II, en tant que composant E,

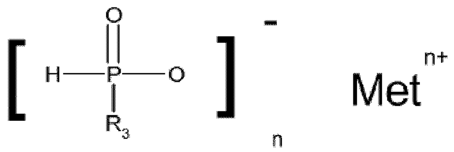 (II),

formule dans laquelle $R_3$ représente un groupe éthyle,
Met est Al, Fe, $TiO_q$ ou Zn,
n représente 2 à 3, et

$$q = (4-n)/2.$$

2. Compositions de polyamide ignifuges selon la revendication 1, **caractérisées en ce que** M et Met représentent Al, m et n valent 3 et **en ce que** le composant D est un sel d'aluminium.

3. Compositions de polyamide ignifuges selon au moins l'une quelconque des revendications 1 et 2, **caractérisées en ce que**

- la proportion de composant A vaut de 25 à 95 % en poids,
- la proportion de composant B vaut de 1 à 45 % en poids,
- la proportion de composant C vaut de 0,75 à 30 % en poids,
- la proportion de composant D vaut de 0,01 à 3 % en poids, et
- la proportion de composant E vaut de 0,01 à 2 % en poids,

les données en pour cent se rapportant à la quantité totale de la composition de polyamide.

4. Compositions de polyamide ignifuges selon la revendication 3, **caractérisées en ce que**

- la proportion de composant A vaut de 25 à 75 % en poids,
- la proportion de composant B vaut de 20 à 40 % en poids,
- la proportion de composant C vaut de 5 à 20 % en poids,
- la proportion de composant D vaut de 0, 05 à 1,5 % en poids, et
- la proportion de composant E vaut de 0,01 à 0,5 % en poids,

les données en pour cent se rapportant à la quantité totale de la composition de polyamide.

5. Compositions de polyamide ignifuges selon au moins l'une quelconque des revendications 1 à 4, **caractérisées en ce que** celles-ci contiennent comme autre composant F un sel d'acide phosphonique de formule (IX)

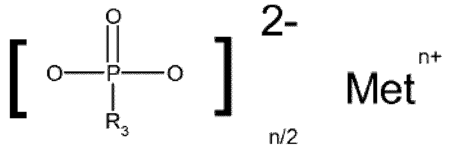 (IX),

dans laquelle $R_3$ représente un groupe éthyle,
Met est Al, Fe, $TiO_q$ ou Zn,
n représente 2 à <4, et

$$q = (4-n)/2,$$

le composant F étant présent en une quantité de 0,005 à 1 % en poids, en particulier en une quantité de 0,01 à 0,5 % en poids, par rapport à la quantité totale de la composition de polyamide.

6. Compositions de polyamide ignifuges selon au moins l'une quelconque des revendications 1 à 6, **caractérisées en ce que** celles-ci contiennent comme autre composant G un phosphonate inorganique.

7. Compositions de polyamide ignifuges selon la revendication 6, **caractérisées en ce que** le phosphonate inorganique est un composé de formule (III)

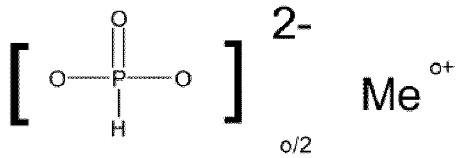 (III),

dans laquelle Me est Fe, $TiO_r$, Zn ou en particulier Al,
o représente 2 à 3, et

$$r = (4-o)/2,$$

le composé de formule (III) étant présent en une quantité de 0,005 à 10 % en poids, en particulier en une quantité de 0,02 à 5 % en poids, par rapport à la quantité totale de la composition de polyamide.

8. Compositions de polyamide ignifuges selon au moins l'une quelconque des revendications 1 à 7, **caractérisées en ce que** celles-ci présentent un Comparative Tracking Index, mesuré selon l'International Electrotechnical Commission Standard IEC-60112/3, supérieur ou égal à 500 volts.

9. Compositions de polyamide ignifuges selon au moins l'une quelconque des revendications 1 à 8, **caractérisées en ce que** celles-ci atteignent une évaluation de V0 selon UL-94 de 3,2 mm à 0,4 mm d'épaisseur.

10. Compositions de polyamide ignifuges selon au moins l'une quelconque des revendications 1 à 9, **caractérisées en ce que** celles-ci présentent une HDT-A selon DIN EN ISO 75-3 d'au moins 300 °C.

11. Compositions de polyamide ignifuges selon au moins l'une quelconque des revendications 1 à 10, **caractérisées en ce que** pour ce qui est du composant A il s'agit d'un polyamide aromatique ou partiellement aromatique ou d'un mélange de plusieurs polyamides aromatiques ou partiellement aromatiques ou d'un mélange de polyamide 6.6 et d'un ou de plusieurs polyamides aromatiques ou partiellement aromatiques.

12. Compositions de polyamide ignifuges selon la revendication 11, **caractérisées en ce que** pour ce qui est du composant A il s'agit d'un polyamide aromatique ou partiellement aromatique ou d'un mélange de plusieurs polyamides aromatiques ou partiellement aromatiques.

13. Compositions de polyamide ignifuges selon au moins l'une quelconque des revendications 1 à 12, **caractérisées**

**en ce qu'**on utilise comme composant B des fibres de verre.

**14.** Compositions de polyamide ignifuges selon au moins l'une quelconque des revendications 1 à 13, **caractérisées en ce que** les composants C, D et E sont présents sous forme de particules, la taille moyenne de particule $d_{50}$ de ces composants valant de 1 à 100 $\mu$m.

**15.** Compositions de polyamide ignifuges selon au moins l'une quelconque des revendications 1 à 14, **caractérisées en ce que** celles-ci contiennent d'autres additifs en tant que composant H, les autres additifs étant choisis dans le groupe constitué par les antioxydants, stabilisants UV, stabilisants aux rayons gamma, stabilisants vis-à-vis de l'hydrolyse, costabilisants pour antioxydants, agents antistatiques, émulsifiants agents de nucléation, plastifiants, adjuvants de mise en œuvre, modificateurs antichoc, colorants, pigments et/ou autres agents ignifuges qui diffèrent des composants C, D, E, F et G.

**16.** Utilisation de compositions de polyamide selon l'une quelconque des revendications 1 à 15, pour la fabrication de fibres, films et corps moulés, en particulier pour des applications dans le secteur électrique et électronique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 2252258 A
- DE 2447727 A
- WO 200228953 A1
- DE 19734437 A1
- DE 19737727 A1
- US 7420007 B2
- WO 2014135256 A1
- WO 2012045414 A1
- DE 102010018682 A1
- WO 2016065971 A1
- DE 19607635 A1
- DE 102014001222 A1
- DE 102011120218 A1

### In der Beschreibung aufgeführte Nicht-Patentliteratur

- *CHEMICAL ABSTRACTS,* 15099-32-8
- **HANS DOMININGHAUS.** Die Kunststoffe und ihre Eigenschaften. 1998, 14